(19) Europäisches Patentamt
European Patent Office
Office européen des brevets

(11) **EP 3 056 886 B1**

(12) **EUROPÄISCHE PATENTSCHRIFT**

(45) Veröffentlichungstag und Bekanntmachung des Hinweises auf die Patenterteilung:
**26.07.2017 Patentblatt 2017/30**

(51) Int Cl.:
**G01L 1/22** *(2006.01)*    **G01L 5/16** *(2006.01)*

(21) Anmeldenummer: **16153992.9**

(22) Anmeldetag: **03.02.2016**

(54) **KRAFTAUFNEHMERSYSTEM ZUR GLEICHZEITIGEN BESTIMMUNG VON AUS UNTERSCHIEDLICHEN RICHTUNGEN EINWIRKENDEN KRÄFTEN**

FORCE SENSOR SYSTEM FOR THE SIMULTANEOUS DETERMINATION OF FORCES ACTING FROM DIFFERENT DIRECTIONS

SYSTEME DE PRISE DE FORCE DESTINE A DETERMINER SIMULTANEMENT DES FORCES AGISSANT A PARTIR DE DIFFERENTES DIRECTIONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.02.2015   DE 102015102072**

(43) Veröffentlichungstag der Anmeldung:
**17.08.2016   Patentblatt 2016/33**

(73) Patentinhaber: **Brosa AG**
**88069 Tettnang (DE)**

(72) Erfinder: **Fellner, Joachim**
**88212 Ravensburg (DE)**

(74) Vertreter: **Witte, Weller & Partner Patentanwälte mbB**
**Postfach 10 54 62**
**70047 Stuttgart (DE)**

(56) Entgegenhaltungen:
**EP-A1- 2 538 189     DE-B3- 10 302 349**

**Beschreibung**

Die vorliegende Erfindung betrifft ein Kraftaufnehmersystem, das ausgelegt ist, durch insbesondere Scherkräfte hervorgerufene Verformungen insbesondere mittels Dehnungsmessstreifen (DMS) zu messen, wobei mehrere zu messende Kräfte aus unterschiedlichen Richtungen, vorzugsweise senkrecht, auf eine Längsachse des Systems einwirken.

Das Dokument DE 199 60 786 A1 offenbart einen Radialkraftaufnehmer. Das Dokument EP 2 362 201 A1 offenbart eine Kraftmess-Hülse, einen Kraftmess-Körper sowie ein Mess- und Berechnungsverfahren. Das Dokument US 5,490,427 A offenbart einen sechsachsigen Kraftsensor.

Herkömmliche Kraftaufnehmer weisen einen Messkörper vorzugsweise aus Stahl auf, der an einer oder mehreren Stellen hinsichtlich seiner Materialstärke geschwächt ist, um dort eine oder mehrere membranartige Zonen auszubilden, wo eine Messzelle angeordnet ist, um durch mechanische Verformung hervorgerufene Dehnungen und/oder Stauchungen (Biegungen) zu messen, aus denen auf eine die Dehnung und/oder Stauchung verursachende Kraft rückgeschlossen werden kann.

Je nach praktischer Anwendung werden Messachsen (siehe z.B. DE 103 02 349 B3, DE 103 02 352 A1, WO 2008/110360 A1 oder DE 102 45 768 A1) oder Messhülsen (siehe z.B. EP 2 538 189 A1) eingesetzt. Die herkömmlichen Messachsen und Messhülsen weisen in der Regel einen zylindrischen Körper auf. Die Messhülsen sind Hohlzylinder, in welche kundenseitig bereitgestellte (Maschinen-)Achsen, vorzugsweise formschlüssig, einführbar sind. Die Messachsen sind ein- oder mehrteilige Zylinder, die in kundenseitig vorgegebene Bauräume eingeführt werden. Klassische Anwendungsbeispiele sind Seilrollen, wie sie z.B. bei Aufzügen oder Kränen eingesetzt werden. Die konventionellen Kraftaufnehmer sind zur Bestimmung einer einzigen Kraft ausgelegt. Wenn mehrere Kräfte gleichzeitig gemessen werden müssen, die entlang unterschiedlicher Richtungen wirken, werden entsprechend viele konventionelle Kraftaufnehmersysteme eingesetzt.

Kräfte, die entlang einer gleichen Richtung wirken, addieren sich vektoriell zu einer einzigen effektiven Kraft, die entlang dieser Richtung wirkt. Im nachfolgenden werden Kräfte betrachtet, die entlang von Richtungen wirken, die einen Winkel ungleich 0° miteinander einschließen.

Es ist eine Aufgabe der vorliegenden Erfindung, ein (einziges) Kraftaufnehmersystem vorzusehen, welches mehrere Kräfte, die gleichzeitig entlang unterschiedlicher Richtungen wirken, zumindest hinsichtlich ihres Betrages bestimmen kann.

Diese Aufgabe wird gelöst durch ein Kraftaufnehmersystem zum gleichzeitigen Messen mehrerer Kräfte, die radial entlang unterschiedlicher Richtungen gleichzeitig auf eine Längsachse des Kraftaufnehmersystems wirken, mit: mehreren elektrischen Messsystemen, die die einwirkenden Kräfte in elektrische Signale wandeln, die jeweils einer gemessenen Kraft entsprechen, die durch die einwirkenden Kräfte verursacht wird, wobei eine Anzahl der Messsysteme gleich einer Anzahl der gleichzeitig entlang der unterschiedlichen Richtungen einwirkenden Kräfte ist, wobei jedes der Messsysteme eine erste Messzelle und eine zweite Messzelle aufweist, die radial gegenüberliegend zueinander angeordnet sind und die elektrisch miteinander verschaltet sind und jeweils eines der Signale erzeugen; einer Auswertungseinheit, die elektrisch mit den Messsystemen verbunden ist und die Signale der Messsysteme empfängt und verarbeitet, wobei die Auswertungseinheit einen Datenspeicher aufweist; und einem Kraftaufnehmer-Körper, der entlang der Längsachse vorzugsweise rotationssymmetrisch ausgebildet ist, wobei der Körper aufweist: einen ersten axialen Abschnitt, in den die Kräfte radial eingeleitet werden; einen zweiten axialen Abschnitt mit radialen Einstichen zur Aufnahme der Messzellen, wobei der zweite Abschnitt axial an den ersten Abschnitt angrenzt; und einen dritten axialen Abschnitt zur radialen Abstützung und Lagerung des Körpers, wobei der zweite Abschnitt axial zwischen dem dritten Abschnitt und dem ersten Abschnitt angeordnet ist; wobei jede der Messzellen jeweils einen Sensor aufweist, wobei die Sensoren der ersten und zweiten Messzellen jeweils radial gleich zur Längsachse beabstandet sind, elektrisch miteinander verschaltet sind sowie eine virtuelle Verbindungslinie definieren, wobei die jeweilige virtuelle Verbindungslinie durch die Längsachse verläuft und senkrecht auf einer der Richtungen steht, entlang der die Kräfte einwirken; wobei die Auswertungseinheit eingerichtet ist, aus den gemessenen Kräften einen Betrag für jede der einwirkenden Kräfte aus dem folgenden Gleichungssystem zu berechnen: $F_{mess,i}$ = Summe über j von $x_{ij} F_{ein,j}$, wobei i und j jeweils von 1 bis k laufen, wobei k die Anzahl der Messsysteme ist und wobei $X_{ij}$ ein Faktor ist, der für i=j Eins ist und der für i ungleich j vorab fest im Datenspeicher hinterlegt ist.

Die vorliegende Erfindung ermöglicht die betragsmäßige Bestimmung von mehreren Kräften, die gleichzeitig aus unterschiedlichen Richtungen auf das System einwirken, wobei das System lediglich einen einzigen Kraftaufnehmer aufweist, in welchen mehrere Messsysteme integriert sind. Gegenüber herkömmlichen Lösungen wird also nur ein einziger Kraftaufnehmer eingesetzt, wohingegen früher für jede zu messende Kraft ein eigener separater Kraftaufnehmer eingesetzt wurde. Eine Ermittlung der zu messenden eingeleiteten Kraft erfolgt durch Berechnung, indem ein lineares Gleichungssystem gelöst wird. Der Installationsaufwand ist gering. Die Investitionskosten senken sich. Das Gleiche gilt für das Wartungsaufkommen.

Vorzugsweise werden die Faktoren $x_{ij}$ für i ungleich j vorab unter Laborbedingungen gemessen oder vorab berechnet.

Insbesondere ist jedes der Messsysteme in einer einzigen Messebene angeordnet, die senkrecht zur Längsachse orientiert ist.

Vorzugsweise weisen die Sensoren Dehnungsmessstreifen auf.

Weiter ist es von Vorteil, wenn die Einstiche radial orientierte Sacklöcher im zweiten Abschnitt sind, wobei jedes der Sacklöcher einen Boden aufweist, wobei die Sensoren vorzugsweise an den Böden positioniert sind.

Insbesondere ist der Körper eine hohlzylindrische Metallhülse oder eine massive Messachse.

Bei einer weiteren Ausgestaltung weist der zweite Abschnitt eine geringere radiale Ausdehnung als der erste und der dritte Abschnitt auf, wobei der erste und der dritte Abschnitt vorzugsweise eine im Wesentlichen gleiche radiale Ausdehnung aufweisen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1    eine Seitenansicht eines perspektivisch dargestellten Kraftaufnehmersystems der Erfindung;

Fig. 2    eine Schnittansicht entlang einer Linie II-II in Fig. 1 inklusive einer Auswertungseinheit, die in Form eines Blockdiagramms dargestellt ist;

Fig. 3    eine Seitenansicht eines Auslegerkrans, der eine exemplarische Praxisanwendung der Erfindung verdeutlicht; und

Fig. 4    eine vergrößerte Darstellung des Bereichs der Fig. 3, der mit IV bezeichnet ist.

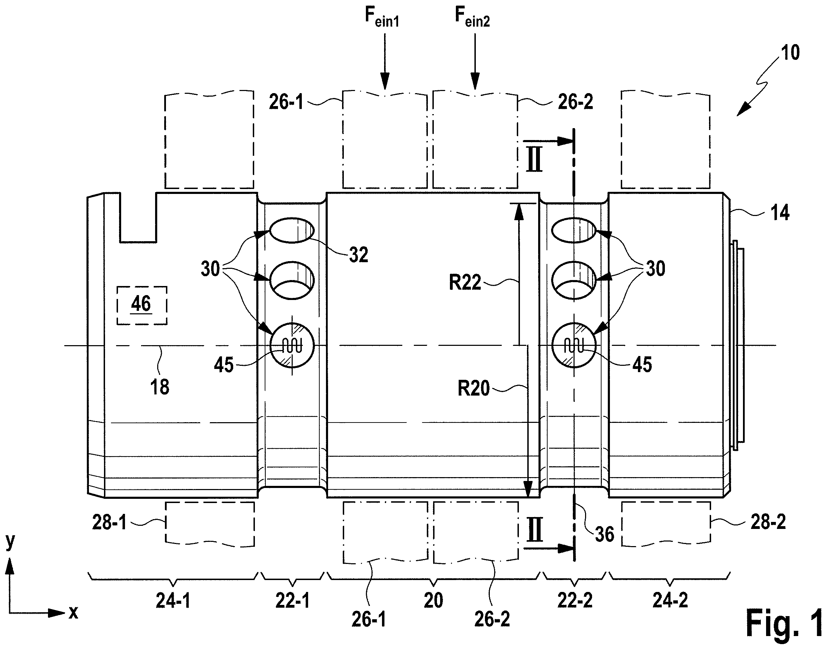

Fig. 1 zeigt eine perspektivische Seitenansicht eines Kraftaufnehmersystems 10 gemäß der Erfindung. Das Kraftaufnehmersystem 10 wird nachfolgend auch kurz nur als "System 10" bezeichnet werden.

Das System 10 weist einen Kraftaufnehmer 12 mit einem Körper 14 auf, der im vorliegenden Fall exemplarisch als Messachse implementiert ist, d.h. der Körper 14 stellt einen massiven Zylinder dar. Der Körper 14 könnte auch als Messhülse implementiert sein. Der Körper 14 erstreckt sich entlang einer zentral angeordneten Längsachse 18, die parallel zur Längsrichtung X der Fig. 1 orientiert ist. Der Körper 14 ist rotationssymmetrisch ausgebildet. Im Allgemeinen ist ein Gegenstand rotationssymmetrisch, wenn der Gegenstand nach einer Drehung um einen bestimmten Winkel genauso aussieht wie vor der Drehung. Im vorliegenden Beispiel des zylindrischen Körpers 14 stellt seine Längsachse 18 die entsprechende Rotationsachse dar. Es versteht sich, dass ein (hier nicht gezeigter) Körper mit einem regelmäßigen n-eckigen Querschnitt, wie z.B. mit einem hexagonalen Querschnitt, ebenfalls rotationssymmetrisch ist.

Der Körper 14 der Fig. 1 weist einen ersten axialen Abschnitt 20, ein oder mehrere zweite axiale Abschnitte 22 und ein oder mehrere dritte axiale Abschnitte 24 auf. Der erste Abschnitt 20 ist axial zentral angeordnet. Die zweiten Abschnitte 22-1 und 22-2 schließen außen in axialer Richtung an den ersten Abschnitt 20 an. Die dritten axialen Abschnitte 24-1 und 24-2 schließen in axialer Richtung an die zweiten Abschnitte 22-1 und 22-2 an, so dass der zweite Abschnitt 22-1 axial zwischen dem ersten Abschnitt 20 und dem dritten Abschnitt 24-1 liegt und so dass der zweite Abschnitt 22-2 axial zwischen dem ersten Abschnitt 20 und dem dritten Abschnitt 24-2 liegt. Es versteht sich, dass der in der Fig. 1 in Bezug auf den ersten Abschnitt 20 axial symmetrisch aufgebaute Körper 14 alternativ auch nur einen einzigen zweiten Abschnitt 22 und einen einzigen dritten Abschnitt 24 aufweisen könnte.

Der axial zentrale erste Abschnitt 20 dient einer Krafteinleitung. Der oder die axial dazu außen liegenden zweiten Abschnitte 22 dienen einer Messung der eingeleiteten Kräfte $F_{ein}$. Die axial ganz außen liegenden dritten Abschnitte 24 dienen einer Abstützung und Lagerung des Körpers 14.

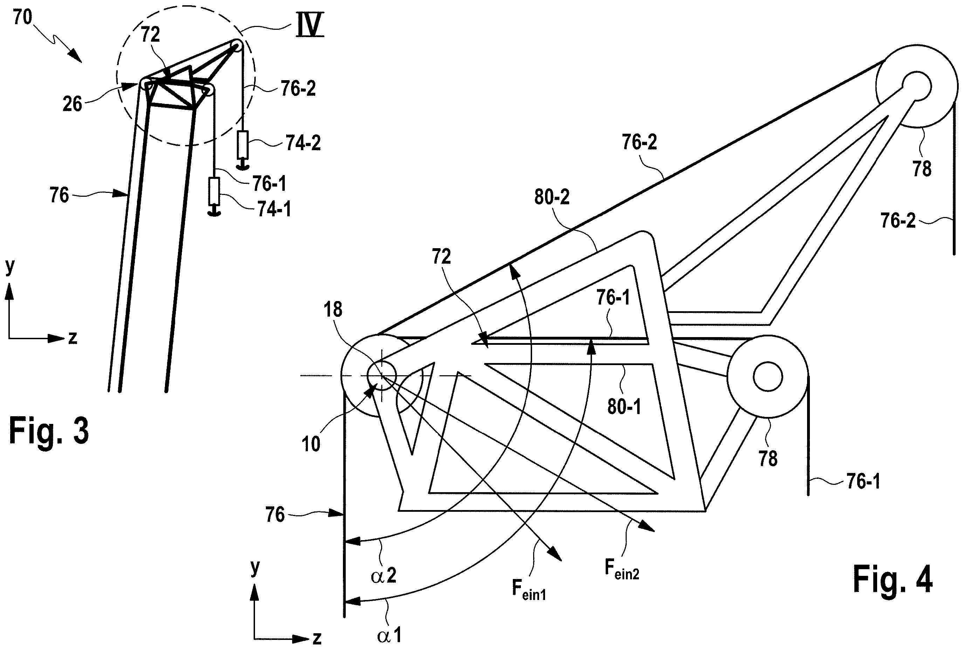

In der Fig. 1 sind exemplarisch zwei Seilrollen 26-1 und 26-2 mit strichpunktierten Linien angedeutet. Die Seilrollen 26 weisen eine hier nicht näher bezeichnete zentrale axiale Ausnehmung auf, um axial auf den Körper 14 aufgesteckt zu werden. Die Seilrollen 26 dienen einer Führung von (hier nicht dargestellten) Seilen 76 (vgl. Fig. 3 und 4), die die radial auf den Körper 14 einwirkenden Kräfte $F_{ein}$ ausüben.

Der Körper 14 stützt sich im Bereich der dritten Abschnitte 24-1 und 24-2 an einem hier mittels einer Strichlinie dargestellten exemplarischen (Maschinen-)Gestell 28-1 bzw. 28-2 ab. Das Gestell 28 weist wiederum hier nicht näher bezeichnete axiale Öffnungen zur Durchführung des Körpers 14 auf.

Der erste Abschnitt 20 sowie die dritten Abschnitte 24-1 und 24-2 weisen in der Fig. 1 einen einheitlichen Radius R20 auf. Die zweiten Abschnitte 22-1 und 22-2 weisen jeweils einen einheitlichen Radius R22 auf, der geringer als der Radius R20 ist. Die zweiten Abschnitte 22-1 und 22-2, die Messzonen des Körpers 14 darstellen, sind gegenüber dem ersten Abschnitt 20 und den dritten Abschnitten 24-1 und 24-2 radial verjüngt, um einen Kraftfluss optimal vom ersten Abschnitt 20 in die dritten Abschnitte 24 zu leiten. Die radiale Verjüngung vergrößert eine Kraftflussdichte im Messbereich.

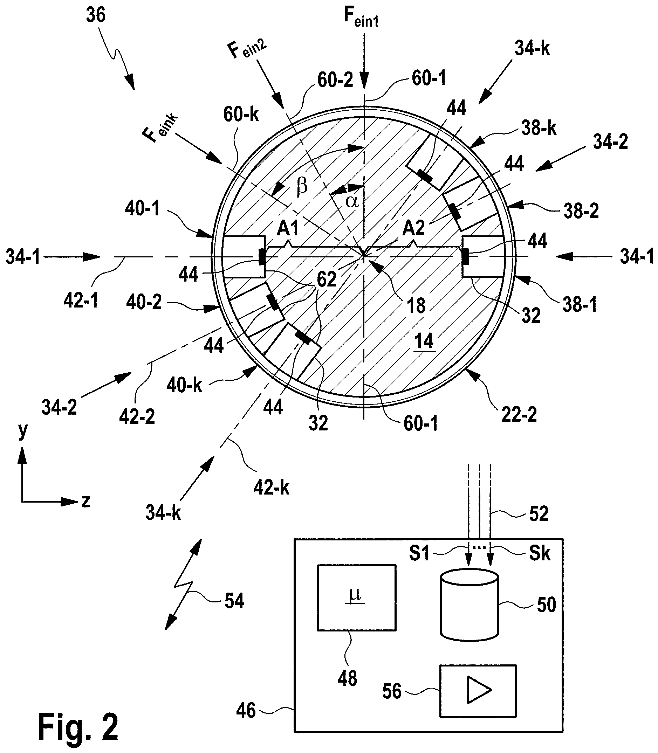

Jeder der zweiten Abschnitte 22 weist mehrere radial orientierte Einstiche 30 auf. In der Fig. 1 weist jeder zweite Abschnitt 22 jeweils drei Einstiche 30 auf, die wiederum jeweils durch ein Sackloch 32 implementiert sind und symmetrisch zueinander angeordnet sind. Die Einstiche 30 dienen einer Aufnahme von Messsystemen 34, wie es nachfolgend unter Bezugnahme auf Fig. 2 erläutert werden wird, die eine Schnittansicht des Körpers 14 entlang der Linie II-II in der Fig. 1 zeigt.

In der Fig. 2 sind exemplarisch drei Messsysteme 34 gezeigt, die mit 34-1, 34-2 und 34-k bezeichnet sind. Der Index "k" gibt an, dass beliebig viele Messsysteme 34 vorgesehen werden können. Die Anzahl k der Messsysteme 34 hängt davon ab, wie viele einwirkende Kräfte $F_{ein}$ gemessen werden sollen. Für jede einwirkende Kraft $F_{ein}$ ist ein eigenes Messsystem 34 vorzusehen. In der Fig. 2 sind zwei effektiv einwirkende Kräfte $F_{ein,1}$ und $F_{ein,2}$ sowie exemplarisch $F_{ein,k}$ für jede weitere einwirkende Kraft gezeigt. Die Kraft $F_{ein,1}$ wirkt entlang der Y-Achse. Die Kraft $F_{ein,2}$ wirkt unter einem Winkel $\alpha$ relativ zu $F_{ein,1}$. $F_{ein,k}$ wirkt unter einem Winkel $\beta$ zu $F_{ein,1}$.

Jedes der drei dargestellten Messsysteme 34-1, 34-2 und 34-k weist eine erste Messzelle 38 und eine diametral gegenüberliegend angeordnete zweite Messzelle 40 auf, die miteinander verknüpft sind. Das Messsystem 34-1 weist die erste Messzelle 38-1 und die zweite Messzelle 40-1 auf, die entlang einer imaginären Verbindungslinie 42-1 angeordnet sind, die sich wiederum parallel zur Z-Richtung durch die Längsachse 18 erstreckt und die senkrecht zu $F_{ein,1}$ orientiert ist. Das Messsystem 34-2 weist die erste Messzelle 38-2 und die zweite Messzelle 42-2 auf, die entlang einer imaginären Verbindungslinie 42-2 angeordnet sind, die wiederum durch die Längsachse 18 verläuft und senkrecht zu $F_{ein,2}$ orientiert ist. Das Messsystem 34-k weist eine erste Messzelle 38-k und eine zweite Messzelle 40-k auf, die entlang einer imaginären Verbindungslinie 42-k orientiert sind, die wiederum durch die Längsachse 18 verläuft und senkrecht zu $F_{ein,k}$ orientiert ist.

Es versteht sich, dass die Messsysteme 34 jeweils auch mehr als zwei Messzellen 38 und 40 aufweisen können, die dann entsprechend angeordnet werden müssen.

Jede der Messzellen 38 und 40 weist jeweils einen Sensor 44 auf und ist in einem der radialen Einstiche 30 (vgl. Fig. 1) positioniert. Da die Einstiche 30 exemplarisch als Sacklöcher 32 implementiert sind, können die Sensoren 44, die z.B. durch DMS 45 (vgl. Fig. 1) implementiert sind, an einem Boden 62 der Sacklöcher 32 angebracht (z.B. geklebt oder gesputtert) sein. Die Sensoren 44 von einem der Messsysteme 34 sind vorzugsweise radial gleich zur Längsachse 18 beabstandet. In der Fig. 2 ist dies durch die Abstände A1 und A2 für das erste Messsystem 34-1 gezeigt. Es versteht sich, dass sich die Abstände A unterschiedlicher Messsysteme 34 voneinander unterscheiden können, wenn z.B. die Sacklöcher 32 unterschiedlicher Messsysteme 34 unterschiedlich tief in radiale Richtungen ausgebildet sind. Vorzugsweise sind die Abstände A aller Messsysteme 34 jedoch gleich. Das Gleiche gilt für die Dimensionen der Einstiche 30 bzw. Sacklöcher 32.

Die DMS 45, die zu einem der Messsysteme 34 gehören, sind insbesondere in Form einer Weatonschen Brücke zusammengeschaltet. Die DMS 45 detektieren Spannungen, Dehnungen und Scherungen des Materials des Körpers 14 in dem oder den zweiten Abschnitt(en) 22 infolge der einwirkenden Kräfte $F_{ein}$ durch eine Widerstandsänderung, die in ein elektrisches Signal S umgewandelt wird. Zu diesem Zweck ist das System 10 mit einem hier nicht näher gezeigten und bezeichneten Anschluss zum Anschließen elektrischer Versorgungs- und Signalübertragungskabel 52 versehen. Zur Führung der Kabel 52 können zusätzliche Bohrungen parallel zur Längsachse 18 vorgesehen sein, die in den Figuren nicht gezeigt sind.

In der Fig. 2 sind weitere Elemente des Kraftaufnehmersystems 10 gezeigt. Die Fig. 2 zeigt ferner eine Auswertungseinheit 46, die über die Verbindungen 52 mit den Messsystemen 34 verbunden ist. Alternativ und/oder ergänzend können Daten und/oder Energie auch drahtlos übertragen werden, wie es durch einen Doppelpfeil 54 angedeutet ist.

Die Auswertungseinheit 46 weist eine Verarbeitungseinrichtung, wie z.B. einen Mikroprozessor bzw. -controller 48, auf. Ferner umfasst die Auswertungseinheit 46 einen Datenspeicher 50, dessen Funktion nachfolgend noch näher beschrieben wird. Optional kann die Auswertungseinheit 46 auch einen oder mehrere (Signal-)Verstärker 56 aufweisen.

Die Auswertungseinheit 46 kann in den Kraftaufnehmer 12 integriert sein, wie es exemplarisch in der Fig. 1 angedeutet ist. Die Auswertungseinheit 46 kann alternativ auch außerhalb des Kraftaufnehmers 12 vorgesehen sein, wie es in der Fig. 2 angedeutet ist. Gleiches gilt für die Verstärker 56. Die Verstärker 56 können in den Kraftaufnehmer 12 integriert sein oder außerhalb davon vorgesehen sein.

Da für jede der einwirkenden Kräfte $F_{ein,k}$ ein eigenes Messsystem 34 vorgesehen ist, werden auch k-Signale S erzeugt und über die Verbindungen 52 zur Auswertungseinheit 46 geliefert.

Eine Vorzugsmessrichtung jedes der Messsysteme 34 entspricht jeweils einer Krafteinleitungsrichtung 60 der Kräfte F. Die gemessenen Kräfte $F_{mess}$ setzen sich aus Anteilen der eingeleiteten Kräfte $F_{ein}$ zusammen. Hierbei geht die in der jeweiligen Vorzugsmessrichtung 60 eingeleitete Kraft $F_{ein}$ voll in eine gemessene Gesamtkraft ein ($x_{ij} = 1$ für i gleich j). Jede weitere eingeleitete Kraft $F_{ein}$ geht in der jeweiligen Vorzugsmessrichtung lediglich anteilig ein. Bei k einwirkenden Kräften $F_{ein}$ kann das nachfolgende Gleichungssystem mit k-Gleichungen und k-unbekannten Variablen erstellt werden:

$$F_{mess,1} = x_{11} F_{ein,1} + x_{12}{}^{*} F_{ein,2} + x_{13}{}^{**} F_{ein,3} + \ldots + x_{16}{}^{*} F_{ein,k}$$

$$F_{mess,2} = x_2{}^{*} F_{ein,1} + x_{22} F_{ein,2} + x_{23}{}^{*} F_{ein,3} + \ldots + x_{2k}{}^{*} F_{ein,k}$$

.

.

.

$$F_{mess,k} = x_{k1}{}^{*} F_{ein,1} + x_{k2}{}^{*} F_{ein,2} + \ldots + x_{kk} F_{ein,k}$$

mit:

- $F_{mess.1\ldots k}$: gemessene Kräfte (bekannt)

- $F_{ein,1\ldots k}$: eingeleitete Kräfte (unbekannt)

- $x_{1\ldots k}$: Faktor aus konstruktivem Zusammenhang (bekannt)

In dem oben angegebenen Gleichungssystem stellt $F_{mess,i}$ die durch das i-te Kraftmesssystem 34-i gemessene Kraft dar, die somit bekannt ist. $F_{ein,i}$ stellt die unbekannte, noch zu bestimmende, eingeleitete Kraft dar. Die Faktoren $x_{ij}$ ergeben sich aus der Geometrie der Messsysteme 34 bzw. aus den Richtungen 60 und den dazwischen definierten Winkeln (siehe $\alpha$ und $\beta$ in Fig. 2). Die Richtungen 60 sind ebenfalls vorab bekannt. Somit sind auch die Winkel zwischen den Richtungen 60 vorab bekannt. Nicht bekannt ist, wie groß die Kräfte $F_{ein}$ betragsmäßig sind, die entlang der Richtungen 60 wirken. Dies berechnet die Auswertungseinheit 46.

Die Faktoren $x_{ij}$ können vorab unter Laborbedingungen entweder durch Messung oder rechnerisch aus der Geometrie bestimmt werden. Die Faktoren $x_{ij}$ sind im Datenspeicher 50 (vgl. Fig. 2) hinterlegt. Die Auswertungseinheit 46 greift auf die Faktoren $x_{ij}$ beim Bestimmen der Beträge der einwirkenden Kräfte $F_{ein,i}$ zu. Im Datenspeicher 50 ist ferner ein Algorithmus hinterlegt, um das oben genannte Gleichungssystem in der Verarbeitungseinrichtung 48 zu lösen. Die Faktoren $x_{ij}$ sind anwendungsspezifisch und hängen direkt davon ab, in welcher Richtung 60 die Kräfte F einwirken. Diese Richtungen 60 sind vorab bekannt, wie es nachfolgend unter Bezugnahme auf die Fig. 3 und 4 noch deutlicher werden wird.

Das System 10 hat bei der Messung von k Kräften den Vorteil, dass gegenüber der herkömmlichen Lösung (ein Kraftaufnehmer pro zu messender Kraft) k-1 Kraftaufnehmer weniger benötigt werden. Die Ermittlung der zu messenden, eingeleiteten Kräfte $F_{ein}$ erfolgt durch Berechnung. Der Installationsaufwand sinkt. Die Anfangsinvestition und das Wartungsaufkommen reduziert sich.

Fig. 3 zeigt eine Teilansicht eines Anwendungsbeispiels in der Praxis. Fig. 3 zeigt einen oberen Teil eines Kranauslegers 70. Der Kranausleger 70 weist ein Kopfgestell 72 auf, über welches zwei Seilzüge bzw. Seile 76-1 und 76-2 über Umlenkrollen 78 geführt sind, um zwei Kranhaken 74-1 und 74-2 zu halten. Neben den Umlenkrollen 78, die in der Fig. 4 näher bezeichnet sind, sind auch mehrere Seilrollen 26 vorgesehen, wie in Fig. 1 gezeigt.

Die Fig. 3 und 4 verdeutlichen also ein Praxisbeispiel, bei welchem zwei Kräfte zu messen sind, die aus unterschiedlichen Richtungen auf eine gemeinsame Achse, nämlich die Längsachse 18 des Systems 10, wirken, wie es in Fig. 4 gezeigt ist. Die Kraft $F_{ein,1}$ wird durch den ersten Haken 74-1 hervorgerufen, die über das Seil 76-1 und eine entsprechende Seilrolle 26 auf das System 10 einwirkt. In der Fig. 4 ist die Resultierende für $F_{ein,1}$ gezeigt. $F_{ein,1}$ stellt die Winkelhalbierende des Winkels $\alpha 1$ dar. Der Winkel $\alpha 1$ wird von einem Schenkel 80-1 des Kopfgestells 72 und der Lotrechten definiert, entlang der das Seil 76 links die Fig. 4 verlässt. Der Winkel $\alpha 1$ beträgt in der Fig. 4 ca. 90°.

Ähnliches gilt für die Kraft $F_{ein,2}$, die durch den Haken 74-2 hervorgerufen wird und die die Winkelhalbierende des Winkels $\alpha 2$ repräsentiert. Der Winkel $\alpha 2$ wird durch die Lotrechte und den Schenkel 80-2 umschlossen. Der Winkel $\alpha 2$ beträgt ca. 122°.

Die Winkel $\alpha 1$ und $\alpha 2$ sind durch die Geometrie des Kopfgestells 72 vorgegeben und somit vorbekannt. Der Hersteller des Systems 10 kann die Messsysteme 34 entsprechend im Körper 14 platzieren. Mit dem System 10 der Fig. 4 lassen sich die Beträge der durch die Haken 74-1 und 74-2 hervorgerufenen Kräfte betragsmäßig bestimmen.

Diese Werte können z.B. benutzt werden, um eine Notausschaltung bei Überlast herbeizuführen.

| 10 | Kraftaufnehmersystem |
|----|----------------------|
| 12 | Kraftaufnehmer |
| 14 | Körper von 10 bzw. 12 |
| 18 | Längsachse |
| 20 | 1. Abschnitt (Krafteinleitung) |
| 22 | 2. Abschnitt (Messen) |
| 24 | 3. Abschnitt (Abstützung) |
| 26 | Seilrolle |
| 28 | (Maschinen-)Gestell |
| 30 | Einstich |
| 32 | Sackloch |
| R | Radius |
| 34 | Messsystem |
| 36 | Messebene |
| 38 | 1. Messzelle |
| 40 | 2. Messzelle |
| 42 | virtuelle Verbindungslinie |
| 44 | Sensor |
| A | radialer Abstand von 44 zu 18 |
| 45 | DMS |
| 46 | Auswertungseinheit |
| 48 | $\mu$-Controller |
| 50 | Datenspeicher |
| 52 | Leitung für Signale von 44 |
| 54 | drahtlose Verbindung |
| 56 | Verstärker |
| 60 | (Kraft-)Richtung |
| 62 | Boden von 32 |
| 70 | Kranausleger |
| 72 | Kopfgestell |
| 74 | Kranhaken |
| 76 | Seil |
| 78 | Umlenkrolle |
| 80 | Schenkel von 72 |

**Patentansprüche**

1. Kraftaufnehmersystem (10) zum gleichzeitigen Messen mehrerer Kräfte ($F_{ein}$), die radial entlang unterschiedlicher Richtungen (60) gleichzeitig auf eine Längsachse (18) des Kraftaufnehmersystems (10) wirken, mit:

   mehreren elektrischen Messsystemen (34), die die einwirkenden Kräfte ($F_{ein}$) in elektrische Signale (S) wandeln, die jeweils einer gemessenen Kraft ($F_{mess}$) entsprechen, die durch die einwirkenden Kräfte ($F_{ein}$) verursacht wird, wobei eine Anzahl der Messsysteme (34) gleich einer Anzahl der gleichzeitig entlang der unterschiedlichen Richtungen (60) einwirkenden Kräfte ($F_{ein}$) ist, wobei jedes der Messsysteme (34) eine erste Messzelle (38) und eine zweite Messzelle (40) aufweist, die radial gegenüberliegend zueinander angeordnet sind und die elektrisch miteinander verschaltet sind und jeweils eines der Signale (S) erzeugen;
   einer Auswertungseinheit (46), die elektrisch mit den Messsystemen (34) verbunden ist und die Signale (S) der Messsysteme (34) empfängt und verarbeitet, wobei die Auswertungseinheit (46) einen Datenspeicher (50) aufweist; und
   einem Kraftaufnehmer-Körper (14), der entlang der Längsachse (18) vorzugsweise rotationssymmetrisch ausgebildet ist, wobei der Körper (14) aufweist:

   einen ersten axialen Abschnitt (20), in den die Kräfte ($F_{ein}$) radial eingeleitet werden;
   einen zweiten axialen Abschnitt (22) mit radialen Einstichen (30) zur Aufnahme der Messzellen (38, 40), wobei der zweite Abschnitt (22) axial an den ersten Abschnitt (20) angrenzt; und

einen dritten axialen Abschnitt (24) zur radialen Abstützung und Lagerung des Körpers (14), wobei der zweite Abschnitt (22) axial zwischen dem dritten Abschnitt (24) und dem ersten Abschnitt (20) angeordnet ist; wobei jede der Messzellen (38, 40) jeweils einen Sensor (44) aufweist, wobei die Sensoren (44) der ersten und zweiten Messzellen (38, 40) jeweils radial gleich zur Längsachse (18) beabstandet (A) sind, elektrisch miteinander verschaltet sind sowie eine virtuelle Verbindungslinie (42) definieren, wobei die jeweilige virtuelle Verbindungslinie (42) durch die Längsachse (18) verläuft und senkrecht auf einer der Richtungen (60) steht, entlang der die Kräfte ($F_{ein}$) einwirken;

wobei die Auswertungseinheit (46) eingerichtet ist, aus den gemessenen Kräften (F mess) einen Betrag für jede der einwirkenden Kräfte ($F_{ein}$) aus dem folgenden Gleichungssystem zu berechnen:

$$F_{mess,i} = \sum_{j=1}^{k} x_{ij} F_{ein,j}$$

wobei i und j jeweils von 1 bis k laufen, wobei k die Anzahl der Messsysteme (34) ist und wobei $X_{ij}$ ein Faktor ist, der für i=j Eins ist und der für i ungleich j vorab fest im Datenspeicher (50) hinterlegt ist.

2. System (10) nach Anspruch 1, wobei der Faktor $X_{ij}$ für i ungleich j vorab unter Laborbedingungen gemessen wurde oder vorab berechnet wurde.

3. System nach Anspruch 1 oder 2, wobei jedes der Messsysteme (34) in einer einzigen Messebene (36) angeordnet ist, die senkrecht zur Längsachse (18) orientiert ist.

4. System nach einem der Ansprüche 1 bis 3, wobei die Sensoren (44) Dehnungsmessstreifen (45) aufweisen.

5. System nach einem der Ansprüche 1 bis 4, wobei die Einstiche (30) radial orientierte Sacklöcher (32) im zweiten Abschnitt (22) sind, wobei jedes der Sacklöcher (32) einen Boden (62) aufweist, wobei die Sensoren (44) an den Böden (62) positioniert sind.

6. System nach einem der Ansprüche 1 bis 5, wobei der Kraftaufnehmer-Körper (14) eine hohlzylindrische Messhülse oder eine massive Messachse ist.

7. System nach einem der Ansprüche 1 bis 6, wobei der zweite Abschnitt (22) eine geringere radiale Ausdehnung (R22) als der erste und der dritte Abschnitt (20, 24) aufweist, wobei der erste und der dritte Abschnitt (20, 24) vorzugsweise eine im Wesentlichen gleiche radiale Ausdehnung (R20) aufweisen.

8. System nach einem der Ansprüche 1 bis 7, wobei mindestens drei Messsysteme (34) vorgesehen sind.

**Claims**

1. Force-sensor system (10) for simultaneously measuring several forces ($F_{ein}$), which simultaneously act radially along different directions (60) on a longitudinal axis (18) of the force-sensor systems (10), comprising:

several electric measuring systems (34) converting the acting forces ($F_{ein}$) into electrical signals (S) which respectively correspond to a measured force ($F_{mess}$) caused by the acting forces ($F_{ein}$), wherein a number of the measuring systems (34) is equal to a number of the forces ($F_{ein}$) acting simultaneously along the different directions (60), wherein each of the measuring systems (34) comprises a first measuring cell (38) and a second measuring cell (40), which are oppositely arranged radially to each other and connected electrically to each other and generate respectively one of the signals (S);

an evaluation unit (46) which is connected electrically to the measuring systems (34) and which receives and processes the signals (S) of the measuring systems (34), wherein the evaluation unit (46) comprises a data storage (50); and

a force-sensor body (14) formed along the longitudinal axis (18), preferably in a rotationally-symmetric manner, wherein the body (14) comprises:

a first axial portion (20) into which the forces ($F_{ein}$) are introduced radially;
a second axial portion (22) having radial grooves (30) for receiving the measuring cells (38, 40), wherein the second portion (22) is axially adjacent to the first portion (20); and

a third axial portion (24) for radially supporting and resting the body (14), wherein the second portion (22) is arranged axially between the third portion (24) and the first portion (20);

wherein each of the measuring cells (38, 40) respectively comprises a sensor (44), wherein the sensors (44) of the first and second measuring cells (38, 40) are respectively distanced (A) equally in a radial direction to the longitudinal axis (18), are electrically connected to each other, as well as define a virtual connection line (42), wherein the respective virtual connection line (42) extends through the longitudinal axis (18) and stands perpendicular on one of the directions (60) along which the forces ($F_{ein}$) act;

wherein the evaluation unit (46) is configured to calculate from the measured forces ($F_{mess}$) an amount of each of the acting forces ($F_{ein}$) based on the following system of equations:

$$F_{mess,i} = \sum_{j=1}^{k} x_{ij} F_{ein,j}$$

wherein i and j respectively run from 1 to k, wherein k is the number of the measuring systems (34) and wherein $X_{ij}$ is a factor which is one for i=j and which is permanently recorded in advance in the data storage (50) if i is unequal j.

2. The system (10) of claim 1, wherein the factor $X_{ij}$ for i being unqual j has been measured in advance under laboratory conditions or has been calculated in advance.

3. The system of claim 1 or 2, wherein each of the measuring systems (34) is arranged in one single measuring plane (36) which is orientated perpendicular to the longitudinal axis (18).

4. The system of any of claims 1 to 3, wherein the sensors (44) comprise strain gauges (45).

5. The system of any of claims 1 to 4, wherein the grooves (30) are radially orientated blind holes (32) in the second portion (22), wherein each of the blind holes (32) comprises a bottom (62), wherein the sensors (44) are positioned on the bottoms (62).

6. The system of any of claims 1 to 5, wherein the force-sensor body (14) is a hollow cylinder-shaped measuring sleeve or a massive measuring pin.

7. The system of any of claims 1 to 6, wherein the second portion (22) has a smaller radial expansion (R22) than the first and third portions (20, 24), wherein the first and third portions (20, 24) preferably have a radial expansion (R20) which is substantially identical.

8. The system of any of claims 1 to 7, wherein at least three measuring systems (34) are provided.

**Revendications**

1. Système de prise de force (10) destiné à mesurer simultanément plusieurs forces ($F_{ein}$) agissant simultanément radialement suivant des directions différentes (60) sur un axe longitudinal (18) du système de prise de force (10), comportant :

plusieurs systèmes de mesure électriques (34) qui convertissent les forces qui s'exercent ($F_{ein}$) en signaux électriques (S) correspondant respectivement à une force mesurée ($F_{mess}$) provoquée par les forces qui s'exercent ($F_{ein}$), dans lequel un nombre des systèmes de mesure (34) est égal à un nombre des forces qui s'exercent ($F_{ein}$) simultanément suivant les directions différentes (60), dans lequel chacun des systèmes de mesure (34) comporte une première cellule de mesure (38) et une deuxième cellule de mesure (40) qui sont disposées de manière opposée radialement l'une à l'autre et qui sont électriquement connectées l'une à l'autre et génèrent respectivement l'un des signaux (S) ;

une unité d'évaluation (46) qui est électriquement reliée aux systèmes de mesure (34) et reçoit et traite les signaux (S) des systèmes de mesure (34), dans lequel l'unité d'évaluation (46) comporte une mémoire de données (50) ; et

un corps de prise de force (14) qui est réalisé de préférence de manière symétrique de rotation le long de l'axe longitudinal (18), dans lequel le corps (14) comporte :

une première partie axiale (20) dans laquelle les forces (Fein) sont appliquées radialement ;
une deuxième partie axiale (22) présentant des rainures radiales (30) destinées à recevoir les cellules de mesure (38, 40), dans lequel la deuxième partie (22) est axialement adjacente à la première partie (20) ; et
une troisième partie axiale (24) destinée à supporter et soutenir le corps (14), dans lequel la deuxième partie (22) est disposée axialement entre la troisième partie (24) et la première partie (20) ;
dans lequel chacune des cellules de mesure (38, 40) comporte respectivement un capteur (44), dans lequel les capteurs (44) des première et deuxième cellules de mesure (38, 40) sont respectivement espacés (A) radialement de manière régulière par rapport à l'axe longitudinal (18), sont connectés électriquement l'un à l'autre et définissent ainsi une ligne de liaison virtuelle (42), dans lequel la ligne de liaison virtuelle (42) respective passe par l'axe longitudinal (18) et est perpendiculaire à l'une des directions (60) le long de laquelle s'exercent les forces ($F_{ein}$) ;
dans lequel l'unité d'évaluation (46) est conçue pour calculer à partir des forces mesurées (F mess) une valeur de chacune des forces qui s'exercent ($F_{ein}$) à partir du système d'équations suivant :

$$F_{mess,i} = \sum_{j=1}^{k} X_{ij} F_{ein,j}$$

où i et j vont respectivement de 1 à k, où k est le nombre des systèmes de mesure (34) et ou $X_{ij}$ est un facteur qui est égal à 1 pour i=j et qui est préalablement stocké de manière fixe dans la mémoire de données (50) pour i différent de j.

2.  Système (10) selon la revendication 1, dans lequel le facteur $X_{ij}$, pour i différent de j, a été préalablement mesuré dans des conditions de laboratoire ou a été préalablement calculé.

3.  Système selon la revendication 1 ou 2, dans lequel chacun des systèmes de mesure (34) est disposé dans un plan de mesure unique (36) qui est orienté perpendiculairement à l'axe longitudinal (18).

4.  Système selon l'une quelconque des revendications 1 à 3, dans lequel les capteurs (44) comportent des jauges de contrainte (45).

5.  Système selon l'une quelconque des revendications 1 à 4, dans lequel les rainures (30) sont des trous borgnes (32) orientés radialement dans la deuxième partie (22), dans lequel chacun des trous borgnes (32) présente un fond (62), dans lequel les capteurs (44) sont positionnés sur le fond (62).

6.  Système selon l'une quelconque des revendications 1 à 5, dans lequel le corps de prise de force (14) est un manchon de mesure cylindrique creux ou un axe de mesure plein.

7.  Système selon l'une quelconque des revendications 1 à 6, dans lequel la deuxième partie (22) présente une extension radiale (R22) inférieure à celle des première et deuxième parties (20, 24), dans lequel les première et troisième parties (20, 24) présentent de préférence des extensions radiales (R20) sensiblement égales.

8.  Système selon l'une quelconque des revendications 1 à 7, dans lequel il est prévu au moins trois systèmes de mesure (34).

Fig. 1

EP 3 056 886 B1

Fig. 2

**Fig. 3**

**Fig. 4**

EP 3 056 886 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19960786 A1
- EP 2362201 A1
- US 5490427 A
- DE 10302349 B3
- DE 10302352 A1
- WO 2008110360 A1
- DE 10245768 A1
- EP 2538189 A1